# EUROPEAN PATENT SPECIFICATION

(11) **EP 3 609 431 B1**
(45) Date of publication and mention of the grant of the patent: **14.07.2021**
(21) Application number: 18785210.8
(22) Date of filing: 12.04.2018
(51) Int. Cl.: A61D 19/00, A01K 45/00, A01K 41/00

(54) **DEVICES AND METHODS FOR PROMOTING PRODUCTION OF FEMALE EMBRYOS IN EGGS**
VORRICHTUNGEN UND VERFAHREN ZUR FÖRDERUNG DER PRODUKTION VON WEIBLICHEN EMBRYONEN IN EIERN
DISPOSITIFS ET PROCÉDÉS POUR FAVORISER LA PRODUCTION D'EMBRYONS FEMELLES DANS DES OEUFS

(30) Priority: 13.04.2017 US 201762485025 P
(43) Date of publication of application: 19.02.2020
(73) Proprietor: N.R SOOS Technology Ltd., 2018500 Kaukab Abu al-Hija (IL)
(72) Inventor: HAJ' NASHAT, Mohamad, 2018500 Kaukab Abu al-Hija (IL)
(74) Representative: AWA Denmark A/S
(86) International application number: PCT/IL2018/050419
(87) International publication number: WO 2018/189745

(56) References cited:
- EP-A1- 0 675 678
- CN-A- 105 961 221
- US-A- 3 382 846
- VETERANY, L. et al.: "The influence of ultrasound on chicken hatching", Die Bodenkultur, vol. 53, no. 3, 31 December 2002 (2002-12-31), pages 167-171, XP055556494,
- GOTH, ANN et al.: "Temperature-dependent sex ratio in a bird", Biology letters, vol. 1, no. 1, 31 December 2005 (2005-12-31), pages 31-33, XP055556589,

## Description

### FIELD OF THE INVENTION

Embodiments of the disclosure relate to promoting production of female embryos of oviparous animals.

### BACKGROUND

In animal production markets such as the poultry market, the ability to control or affect the sex of the animals may enhance production and efficiency of production.

For example, in egg laying operations only hens or females are desired. Thus, when a flock of birds is born, only female birds are retained, and often male birds are euthanized or otherwise disposed of. Because males and females are born at an approximate 50/50 sex ratio, approximately half of all avian born at such operations are thus lost and unproductive or provide a diminished production.

There is thus a need in the art for controlling, promoting, or otherwise influencing the sex of the birds before hatching in order to selectively produce more male or female birds, and thereby increase production and decrease waste and costs.

A work titled "The influence of ultrasound on chicken hatching" was performed by L. Veterány and S. Hluchy and published in Die Bodenkultur, vol. 53, no. 3, 31 December 2002, pages 167-171. In the work the influence of synthetic ultrasound on the hatching of the Rhode Island Red breed of chicken was investigated. In the experiment embryos were, from the first hour of incubation, stimulated by ultrasound generated by the transducer oscillating at the frequency of 30 kHz and the power of 60 W, influencing the sex differentiation in control groups in favour of males.

Furthermore, in the US 3382846A patent is disclosed a method of obtaining certain useful genetic effects by the treatment of egg-laying animal organisms with ultrasonic waves. And in the CN 105961221A patent is disclosed a storing method of wild goose hatching eggs by disinfecting the hatching eggs, preparing shell covering powder, and storing the hatching eggs. The shell covering powder is prepared through the combination of ultrasonic treatment resulting in an improved hatching quality.

The foregoing examples of the related art and limitations related therewith are intended to be illustrative and not exclusive. Other limitations of the related art will become apparent to those of skill in the art upon a reading of the specification and a study of the figures.

### SUMMARY

The following embodiments and aspects thereof are described and illustrated in conjunction with systems, tools and methods which are meant to be exemplary and illustrative, not limiting in scope. The method according to the invention is defined in claim 1 and the system according to the invention is defined in claim 13.

According to the invention, there is provided a method for promoting production of female embryos in eggs, the method comprising the steps of incubating a plurality of fertilized eggs to promote hatching of the fertilized eggs; and transmitting a soundwave to the fertilized eggs, thereby promoting production of female embryos in the fertilized eggs.

In some embodiments, the transmitting is performed during incubation.

In some embodiments, the incubation period is defined as the time period that begins upon laying of an egg, preferably a fertilized egg, and ends upon hatching thereof. The incubation is typically about 21 days.

According to the invention, the soundwave has a frequency ranging from about 100 Hz to 1200 Hz.

In some embodiments, the fertilized eggs are chicken eggs.

In some embodiments, the incubating step is performed for a duration of about 21 days. In some embodiments, the incubation is performed under at least one predetermined environmental condition selected from humidity and temperature. In some embodiments, the humidity ranges from 70% to 80%. In some embodiments, the temperature ranges from 36 to 38 degree Celsius.

In some embodiments, the soundwave is transmitted during one or more predetermined time periods. In some embodiments, each of the one or more predetermined time periods ranges from 7 to 10 days. In some embodiments, the frequency of the soundwave varies between the one or more predetermined time periods.

In some embodiments, a wave frequency during a first predetermined time period ranges from 700 Hz to 800 Hz. In some embodiments, a wave frequency during a second predetermined time period ranges from 500 Hz to 600 Hz. In some embodiments, a wave frequency during a third predetermined time period ranges from 700 Hz to 800 Hz.

In some embodiments, transmitting the soundwave includes: transmitting a frequency ranging from about 700 Hz to 800 Hz during a first week of incubation; transmitting a frequency ranging from about 500 Hz to 600 Hz during a second week of incubation; and transmitting a frequency ranging from about 700 Hz to 800 Hz during a third week of incubation.

According to the invention, there is provided a system comprising:
an incubator for incubating fertilized eggs under predetermined environmental conditions to promote hatching of the fertilized eggs; a soundwave transmitter configured to transmit a variable frequency ranging from about 100 Hz to 2000 Hz during incubation to promote production of female embryos in the fertilized egg; and a controller configured to operate the transmitter. According to some embodiments, the controller is further configured to control the temperature and/or the humidity during incubation.

According to the invention, there is provided a method for promoting production of female embryos in eggs, the method comprising the steps of: incubating a plurality of fertilized eggs to promote hatching of the fertilized eggs; and transmitting a soundwave having a defined frequency to the fertilized eggs, thereby promoting production of female embryos in the fertilized eggs.

According to some embodiments, the fertilized eggs are chicken eggs. According to some embodiments, the incubating is performed for a duration of about 21 days.

According to some embodiments, the term "production of female embryos" refer to hatching of female hatchlings.

According to some embodiments, the percentage of female hatchlings, applying the methods and/or system disclosed herein, is over 70%, for example, over 75%, between 75% to 95%, over 80%, over 85%, over 90% or over 95%.

According to some embodiments, the soundwave is transmitted or intermittently transmitted during incubation.

According to some embodiments, the soundwave is transmitted or intermittently transmitted during the first 14 days of incubation.

According to some embodiments, the soundwave is transmitted or intermittently transmitted during one or more predetermined time periods within the incubation period.

According to some embodiments, the defined frequency of the soundwave may vary between the one or more predetermined time periods.

According to some embodiments, the defined frequency may be preselected, for example determined and varied according to a transmission protocol.

According to some embodiments, the defined frequency may be changed randomly during or between time periods.

According to some embodiments, transmitting the soundwave varies depending on an incubation day.

According to some embodiments, transmitting the soundwave may include intermittently transmitting the soundwave on defined incubation days.

According to the invention, the defined frequency ranges from about 100 Hz to 1200 Hz, for example, 500 Hz to 600 Hz, 550 Hz to 650 Hz, 600 Hz to 700 Hz, 600 Hz to 800 Hz.

According to some embodiments, the sound having determined frequency is transmitted during discrete (optionally, predetermined) time periods within the incubation period. According to some embodiments, the frequency during a first predetermined time period ranges from 600 Hz to 700 Hz. According to some embodiments, the frequency during a second predetermined time period ranges from 500 Hz to 600 Hz. According to some embodiments, the frequency during a third predetermined time period ranges from 500 Hz to 700 Hz. According to some embodiments, the duration of a predetermined time period ranges between 10 minutes to 5 hours, for example, about 10 minutes to 60 minutes, 30 minutes to 60 minutes, 30 minutes to 120 minutes, 45 minutes to 90 minutes, 1 hour to 2 hours, 2-3 hours or 3-5 hours. According to some embodiments, a pause between two successive time periods ranges between 1 hour to 5 days for example, 1-4 hours, 2-6 hours, 3-8 hours, 6-12 hours, 1-2 days, 2-5 days.

According to some embodiments, the incubation is performed under at least one controlled environmental condition selected from humidity and temperature. According to some embodiments, the humidity ranges from 50% to 80%. According to some embodiments, the humidity is about 55%.

According to some embodiments, the temperature ranges from 36° to 38° Celsius, for example, about 37° Celsius. According to some embodiments, the temperature may be controllably changed during incubation.

More details and features of the current invention and its embodiments may be found in the description and the attached drawings.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In case of conflict, the patent specification, including definitions, will control. In addition, the materials, methods, and examples are illustrative only and not intended to be limiting.

### BRIEF DESCRIPTION OF THE FIGURES

Exemplary embodiments are illustrated in referenced figures. Dimensions of components and features shown in the figures are generally chosen for convenience and clarity of presentation and are not necessarily shown to scale. It is intended that the embodiments and figures disclosed herein are to be considered illustrative rather than restrictive. The figures are listed below:
Fig. **1** schematically depicts a system for promoting production of female embryos within eggs, according to an exemplary embodiment of the current invention;
Fig. **2** schematically depicts a system for promoting production of female embryos within eggs, according to an exemplary embodiment of the current invention;
Fig. **3** is a flow chart of the steps of a method for promoting production of female embryos within eggs, in accordance with some embodiments; and
Fig. **4** is a flow chart of the steps of another method for promoting production of female embryos within eggs, in accordance with some embodiments.

### DETAILED DESCRIPTION

Disclosed herein are systems and methods for promoting the development of female embryos in fertilized eggs by applying a soundwave to incubated fertilized eggs.

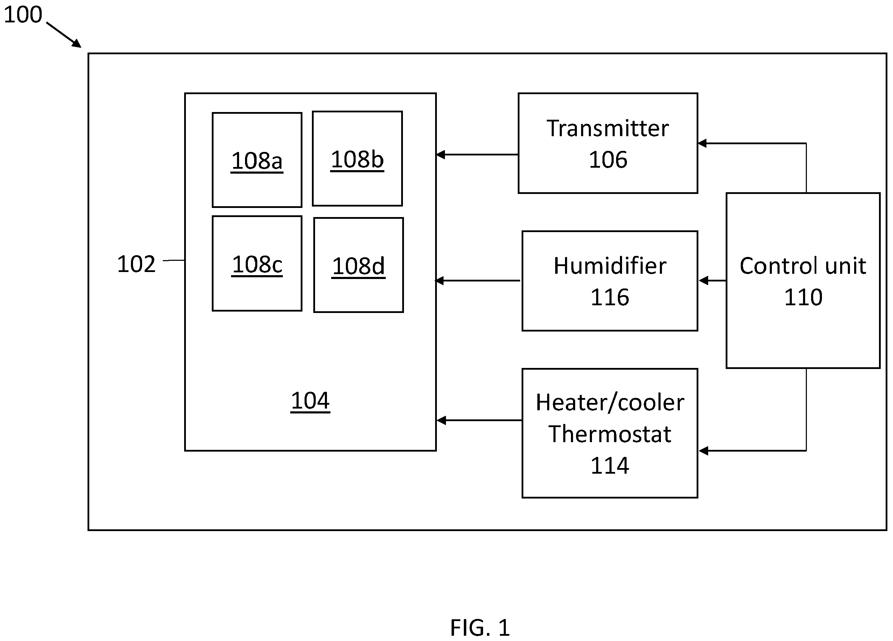

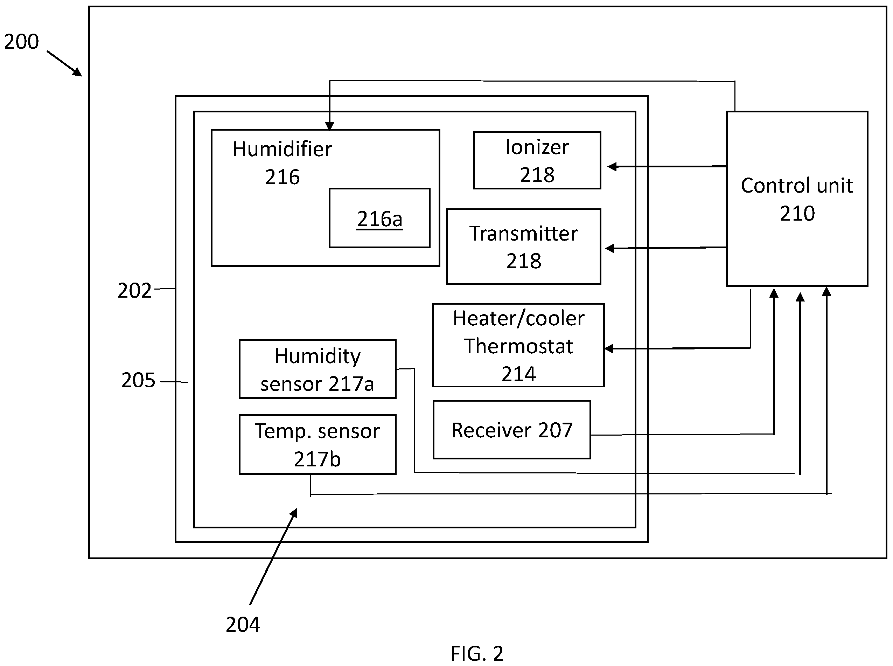

Throughout the following description, similar elements of different embodiments of the device are referenced by element numbers differing by integer multiples of **100.** For example, an incubator of Fig. **1** is referenced by the number **102,** and an incubator of Fig. **2****,** which corresponds to incubator **102** of Fig. **1**, is referenced by the number **202.**

Reference is now made to Fig. 1, which is a block diagram showing a system **100** that may be used to promote development of female embryos in fertilized eggs, in accordance with an embodiment. System **100** includes an incubator **102** having an interior space **104** for housing fertilized eggs (not shown); and a transmitter **106** for transmitting soundwaves. Transmitter **106** may be located inside interior space **104** of incubator **102** or outside of incubator **102** (as shown in Fig. 1), such that the soundwaves are directed to incubator **102.** Incubator **102** may further include one or more cells **108** (e.g. trays) denoted by way of example as 108a-108d, disposed within interior space **104,** for holding the fertilized eggs. In a non-limiting example, eggs are held by trays, each tray include a plurality of slots, and each slot configured to stably hold one egg. A control unit **110** may be configured to control operation of system **100** and/or any of its components, such as to regulate environmental conditions such as temperature and humidity. Optionally, interior space **104** is insulated from external environment. A suitable temperature within interior space **104** may range from 36 to 38 degrees Celsius (°C). A suitable humidity percentage within interior space **104** may range from 70% to 80%. In some embodiments, the humidity percentage ranges from 50% to 85%, 55% to 85%, 60% to 85%, 65% to 85%, 70% to 85%, 75% to 85%, 50% to 80%, 55% to 80%, 60% to 80%, 65% to 80%, 70% to 80%, 75% to 80%, 50% to 75%, 55% to 75%, 50% to 70%, 55% to 70%, 60% to 70%, 65% to 70%, 50% to 65%, 55% to 65%, 50% to 60%, or 55% to 60%. Each possibility represents a separate embodiment of the present invention.

Transmitter **106** may be operated to transmit soundwaves of varying predetermined frequencies on a continuous and/or time varying basis to eggs housed in one or more cells **108** within interior space **104.** Transmitter **106** is operatively coupled to interior space **104.** Control unit **110** may be configured to control the operation of transmitter **106,** for example, to control a frequency of the soundwaves and/or a duration of the transmission of the soundwaves. Control unit **110** may operate transmitter **106** on a continuous, a periodic or a time varying duration. Transmitter **106** may also have a separate control unit for controlling the above-mentioned operations, which is separated from Control unit **110,** or alternatively may be integrated within control unit **110.**

Transmitter **106** may transmit in recurrent cycles. Optionally, each of the cycles has a duration of between an hour and two weeks. Optionally, the duration is about 1 day, 2 days, 3 days, 4 days, 5 days, 6 days, 7 days, 8 days, 9 days, 10 days, 11 days, 12 days, 13 days, or 14 days. Each possibility represents a separate embodiment of the present invention. Optionally, the wave frequency at each cycle is constant. Alternatively, the wave frequency at each cycle may vary.

Control unit **110** may activate/de-activate each component (e.g., transmitter **106,** heater/cooler/thermostat **114,** humidifier **116,** etc.) of system **100,** and may further regulate the operation of any one of the components of system **100** to reach a pre-determined temperature, humidity, or the like. In some embodiments, control unit **110** includes or is electrically coupled to sensors (not shown) located in interior space **104** to receive information on current environmental conditions including level of sound, frequency of sound, temperature, humidity, and the like. In some embodiments, control unit **110** is operative to control any one of the components of system **100** according to a pre-determined schedule. Optionally, control unit **110** may operate a heater and/or cooler **114** for controlling a temperature level within interior space **104** of incubator **102.** Optionally, control unit **110** may operate a humidifier and/or de-humidifier **116** for controlling a level of moisture within interior space **104** of incubator **102.**

Optionally, system **100** is further provided with an actuator (not shown) to continuously or periodically move one or more cells **108** during incubation of one or more eggs. In a non-limiting example, the actuator is operative to rotate or tilt one or more cells **108** between a horizontal position and angled positions (not shown).

Optionally, system **100** is further provided with a light source (not shown) to emit light within interior space **104** of incubator **102.** Control unit **110** may be further operative to control a wavelength of light emitted by the light source.

Reference is now made to Fig. **2**, which is a block diagram showing a system **200** that may be used to promote development of female embryos in fertilized eggs, in accordance with some embodiments. System **200** is substantially similar to system **100** described in Fig. **1****,** with some differences. A notable difference is that an interior space **204** of an incubator **202** is thermally insulated from the external environment by a surrounding insulating layer **205.** Non-limiting examples of a suitable insulating material include steel wool, fiberglass, mineral wool, cellulose, polyurethane foam, polystyrene or any other thermal insulating material. Further, some components of system **200** such as a heater and/or cooler (thermostat) **214,** a humidifier **216,** and a transmitter **206** may be disposed within interior space **204** of incubator **202.** Interior space **204** may further include an air filter **218** for filtering air contained within interior space **204.** Any commercially available air filter may be suitable. Optionally, air filter **218** is an ionic air filter ('Ionizer') which ionizes and filters air. Humidifier **216** may include a source of water **216a** (e.g., water tank) disposed within interior space **204.** Humidifier **216** may add moisture to the filtered air contained within interior space **204** from source of water **216a** to generate humidified filtered air contained within interior space **204.** Non-limiting examples of suitable humidifiers include: an ultrasonic humidifier, an evaporative humidifier, a vaporizer, and an impeller humidifier. Optionally, a control unit **210** may be configured to receive data from one or more sensors (e.g., sensors **207, 217**) located in interior space **204.** The received information is indicative of current environmental conditions (e.g., temperature, humidity, level of sound, frequency of sound, and air pollution). A humidity sensor **217a** (or multiple humidity sensors **217a**) may be disposed within interior space **204** and transmit information on current humidity level to control unit **210.** A temperature sensor **217b** (or multiple temperature sensors **217b)** may be disposed within interior space **204** and transmit information on current temperature to control unit **210.** A receiver **207** may be disposed within interior space **204** and transmit information on level of sound and/or frequency of sound to control unit **210.** Control unit **210** may provide one or more control signals computed from the information received from any of the components of system **200.**

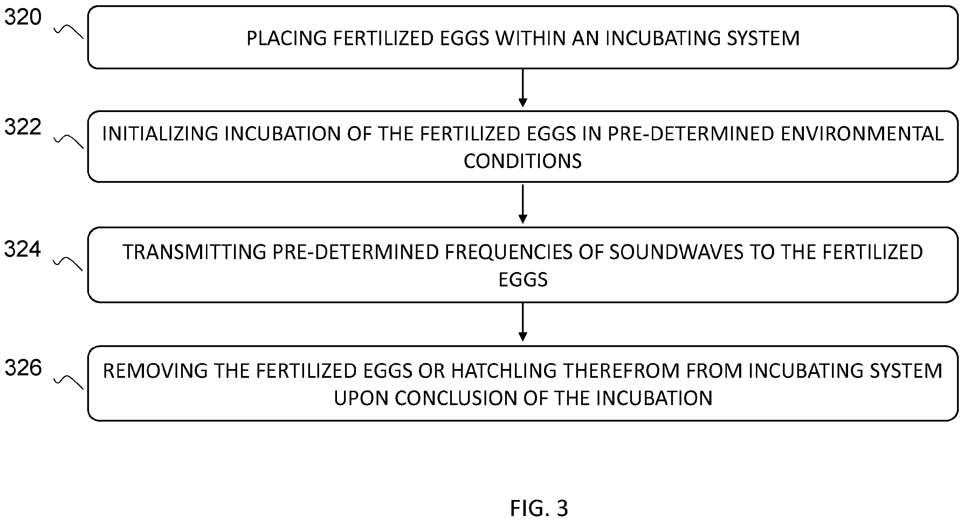

Reference is now made to Fig. **3****,** which is a flow chart of the method for promoting production of female oviparous (such as avian) embryos within eggs, operative, for example, in accordance with the system of Fig. **1****.**

Fertilized eggs (not shown) may be disposed for example within an incubator, such as within interior space **104** of incubator **102** (**step 320**). Optionally, the fertilized eggs are held within one or more cells **108** (e.g. trays), disposed within interior space **104.** Prior to disposition within interior space **104,** the fertilized eggs may be kept for 1 to 21 days at a temperature ranging from 4°C to 24°C (e.g., in a refrigerator, or a storage room).

Incubation of the fertilized eggs under pre-determined environmental conditions is initiated (**step 322**). Optionally, the pre-determined environmental conditions include humidity and/or temperature. Optionally, the humidity ranges between 70% and 80%. Optionally, the temperature ranges between 36°C and 38°C. Optionally, the temperature ranges between 36.5°C and 37.8°C. Optionally, the temperature may vary during incubation. Optionally, the temperature increases during incubation. In a non-limiting example, the temperature during a first period of incubation (e.g., ranging from 15 to 19 days) ranges from 36°C to 37.5°C and the temperature during the last period (e.g., ranging from 1 to 5 days) of incubation ranges from 37°C to 38°C. In another non-limiting example, during incubation of fertilized chicken eggs, the humidity ranges from 70% to 80% and the temperature ranges from 36.5°C to 37.5°C, and for the last 3 to 5 days of incubation the temperature is raised, and ranges between 37°C and 37.8°C.

Optionally, the predetermined environmental conditions further include movement/ actuation of one or more cells **108.** The environmental conditions may be applied according to a pre-determined multi-day schedule, such that different environmental conditions can be applied on different days and/or at different times during each day. A skilled artisan will appreciate that the environmental conditions are generally selected to promote hatching of the fertilized eggs. The fertilized eggs may be incubated for a predetermined incubation period. The predetermined incubation period may range from 21 to 24 days, 21 to 23 days, 21 to 22 days, 20 to 24 days, 20 to 23 days, 20 to 22 days, 20 to 21 days, 19 days to 24 days, 19 days to 23 days, 19 days to 22 days, or 19 days to 21 days. Each possibility represents a separate embodiment of the present invention. Optionally, the predetermined incubation period is about 21 days.

Pre-determined soundwaves are transmitted to the fertilized eggs (**step** 324). The frequency and duration of soundwaves are selected to promote production of female embryos in the fertilized eggs. In some embodiments, soundwaves of a plurality of frequencies may be transmitted. A skilled artisan will appreciate that frequencies and durations of the transmitted soundwaves may be selected according to, for example, a target oviparous animal, or environmental conditions (e.g., incubation period, temperature, humidity, etc.). The transmitted soundwaves may have a frequency ranging, for example, between 1 Hertz (Hz) to 200 Mega Hz (MHz). Optionally, the transmitted soundwaves have a frequency ranging from 20 Hz to 20 kilo Hz (kHz).

According to the invention, the frequency ranges from 100 Hz to 1200 Hz. Optionally, the frequency ranges from 200 Hz to 1000 Hz. Optionally, the frequency ranges from 400 Hz to 900 Hz. Optionally, the frequency ranges from 200 Hz to 800 Hz. In some embodiments, the sound is an ultrasound. In such embodiments, the frequency is more than 20 kHz. In some embodiments, the sound is an infrasound. In such embodiments, the frequency is less than 20 Hz. The soundwaves may be transmitted according to a multi-day schedule, such that different soundwave frequencies may be applied for different periods of time and/or at different times during each period in accordance with environmental conditions applied over the multi-day schedule. The soundwaves may be transmitted during one or more predetermined time periods. Optionally, each of the one or more predetermined time periods ranges from 7 to 10 days. Steps 322 and 324 may be performed simultaneously. Additionally or alternatively, each of steps 322 and 324 may be initiated in an interchangeable order.

In one non-limiting example, the transmission of the pre-determined soundwaves to the fertilized eggs is initiated upon initiation of incubation and continues during at least part of the incubation period. In another non-limiting example, the transmission of the pre-determined soundwaves to the fertilized eggs is initiated prior to initiation of the incubation and continues during at least part of the incubation period.

In another non-limiting example, for an incubation period of three weeks, the transmitter is operated to transmit a soundwave frequency ranging from 600-800 Hz for the first week of incubation, a soundwave frequency ranging from 400-600 Hz for the second week of incubation, and a soundwave frequency ranging from 600-800 Hz for the third week of incubation.

Optionally, the fertilized eggs or hatchlings therefrom are removed from interior space **104** of incubator **102** upon conclusion of the incubation period **(step 326).**

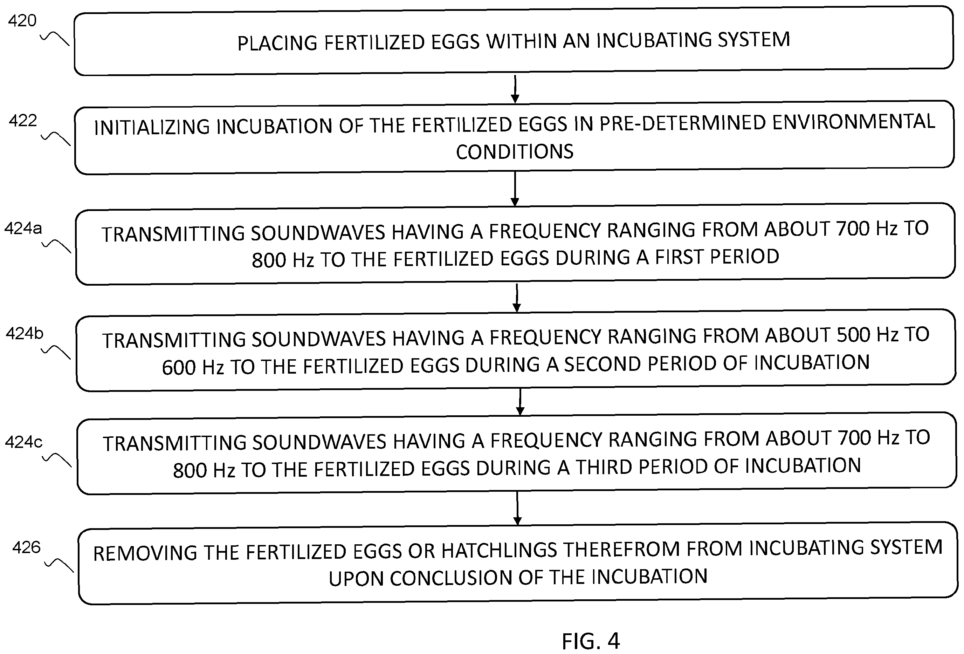

Reference is now made to Fig. **4****,** which is a flow chart of another method for promoting production of female oviparous (e.g., avian) embryos within eggs, operative, for example, in accordance with the system of Fig. **1****.** The method of Fig. **4** is substantially similar to that of Fig. **3****.** However, the transmitted frequencies of soundwaves in steps **424a-424c** of Fig. **4**, which correspond to step **324** of Fig. **3**, vary per each period for at least three consecutive periods. Optionally, the transmitted frequencies of soundwaves in steps **424a-424c** vary per each week for three consecutive weeks. Soundwaves having a frequency ranging from about 700 Hz to 800 Hz are transmitted to the fertilized eggs during a first period (e.g., a first week) of incubation **(step 424a).** Soundwaves having a frequency ranging from about 500 Hz to 600 Hz are transmitted to the fertilized eggs during a second period (e.g., a second week) of incubation **(step 424b).** Soundwaves having a frequency ranging from about 700 Hz to 800 Hz are transmitted to the fertilized eggs during a third period (e.g., third week) of incubation **(step 424c).** Optionally, steps **424a, 424b** and **424c,** are performed in a different order. Optionally, each of steps **424a, 424b** and **424c** may be performed for about a week. Optionally, each of steps **424a, 424b** and **424c** may be performed for 7 to 10 days.

### Experimental examples

### Example 1

The methods and systems described herein above, were experimentally tested for promoting production of female embryos within fertilized eggs. Specifically, a percentage of female hatchlings resulting from incubation of fertilized eggs in the incubating system and under the conditions disclosed herein to promote production of female embryos, was compared to a percentage of female hatchlings resulting from incubation of fertilized eggs in a standard incubating system under standard hatching conditions. Experimental tests were conducted using fertilized eggs of two distinct breeds of chickens: a broiler breed (Ross flock) and a layer breed (Lohmann flock). For each breed, 200 fertilized chicken eggs were divided into two groups: a test group and a control group. Fertilized chicken eggs of the test group ('test group eggs') and fertilized chicken eggs of the control group ('control group eggs') were simultaneously incubated for a period of 21 days.

The test group eggs were incubated in an incubating system which includes a transmitter for transmitting soundwaves, such as incubating system **100** which includes transmitter **106.** During the incubation period the humidity ranges were 70% to 80%, and the incubation temperature was approximately 37°C. The transmitter was operated to transmit soundwaves during the incubation period. The wave frequency was altered every week: a frequency ranging from 700 to 800 Hz was transmitted during the first week, a frequency ranging from 500 to 600 Hz was transmitted during the second week, and a frequency ranging from 700 to 800 Hz was transmitted during the third week.

The control group eggs were incubated in a standard incubator. During the incubation period of the test group eggs the humidity ranges were 70% to 80%, and the incubation temperature was approximately 37°C.

Following hatching of the eggs from the test group and the control group, the sex of the hatchlings was determined. As demonstrated in Table 1, the test group eggs of both breeds resulted in a higher percentage of female hatchlings. These results indicate that the method and system described herein may be utilized to promote production of female embryos in fertilized eggs.

**Table 1. Hatching results of fertilized eggs**

| Breed | Ross | | Lohmann flock | |
|---|---|---|---|---|
| | Test group | Control group | Test group | Control group |
| Total eggs | 100 | 100 | 100 | 100 |
| Hatching rate | 60% | 60% | 60% | 40% |
| Female percentage | 75% | 51% | 89% | 50% |

### Example 2

Further experiments are conducted in industrial hatchers examining 3000 fertilized eggs of a laying chicken breed (Lohmann). A test group of about 3000 fertilized eggs is incubated in an industrial hatcher under standard conditions. A test group of 3000 fertilized eggs is incubated in the industrial hatcher, utilizing the method and the system, such as system **100,** described herein above. To this end, control over the operation of a transmitter, such as transmitter **106,** is integrated into the computer system of the industrial hatchery.

Following an incubation period of 21 days, the hatching percentage and percentage of female hatchlings in both the control and test group is determined. Next, the health and laying potential of the hens of the test group is compared to that of hens resulting from standard incubating. To this end, pullets, which hatched from fertilized eggs of the test group, are placed in a standard poultry house and kept under standard conditions, for 110 days until they reach sexual maturity and become hens. Next, the hens are moved to a laying poultry house. The mortality rate of the pullets and the hens of the test group is monitored and compared to the mortality rate of control pullets and hens which are simultaneously grown in the same poultry houses (about 60,000). Further the average egg yield per hen of the hens in the test group as well as the laying period are compared to hens of the control group.

In the description and claims of the application, each of the words "comprise" "include" and "have", and forms thereof, are not necessarily limited to members in a list with which the words may be associated.

It is appreciated that certain features of the invention, which are, for clarity, described in the context of separate embodiments, may also be provided in combination in a single embodiment. Certain features described in the context of various embodiments are not to be considered essential features of those embodiments, unless the embodiment is inoperative without those elements. Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowcharts and block diagrams in the Figures illustrate the architecture, functionality, and operation of possible implementations of systems, methods, and computer program products according to various embodiments of the present invention. In this regard, each block in the flowcharts or block diagrams may represent a module, segment, or portion of instructions, which comprises one or more executable instructions for implementing the specified logical function(s). In some alternative implementations, the functions noted in the block may occur in a different order than the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or act or carry out combinations of special purpose hardware and computer instructions.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims. In addition, citation or identification of any reference in this application shall not be construed as an admission that such reference is available as prior art to the present invention.

## Claims

1. A method for promoting production of female embryos in eggs, the method comprising the steps of:
incubating a plurality of fertilized eggs to promote hatching of the fertilized eggs; and
transmitting a soundwave having a defined frequency to the fertilized eggs, wherein the defined frequency ranges from about 100 Hz to 2000 Hz,
thereby promoting production of female embryos in the fertilized eggs.

2. The method of claim 1, wherein said fertilized eggs are chicken eggs and wherein the resulted percentage of female hatchlings is over 75%.

3. The method of claim 1, wherein said incubating is performed for a duration of about 21 days.

4. The method of claim 1, wherein the soundwave is transmitted or intermittently transmitted during incubation.

5. The method of claim 1, wherein the soundwave is transmitted or intermittently transmitted during the first 14 days of incubation; or wherein the soundwave is transmitted or intermittently transmitted during one or more predetermined time periods within the incubation period; or wherein transmitting the soundwave varies depending on an incubation day; or, wherein transmitting the soundwave comprises intermittently transmitting soundwaves on defined incubation days.

6. The method of claim 5, wherein the defined frequency of the soundwave varies between the one or more predetermined time periods.

7. The method of claim 5, wherein a frequency during a first predetermined time period ranges from 600 Hz to 700 Hz.

8. The method of claim 7, wherein a frequency during a second predetermined time period ranges from 500 Hz to 600 Hz; preferably wherein a frequency during a third predetermined time period ranges from 500 Hz to 700 Hz.

9. The method of any one of claims 1-8, wherein a duration of a predetermined time period ranges between 10 minutes to 5 hours; preferably wherein a pause between two successive predetermined time periods ranges between 1 hour to 5 days.

10. The method of any one of claims 1-9, wherein said incubation is performed under at least one controlled environmental condition selected from humidity and temperature.

11. The method of claim 10, wherein the humidity ranges from 50% to 80%, preferably wherein the humidity is about 55%.

12. The method of any one of claims 10 to 11, wherein the temperature ranges from 36° to 38° Celsius.

13. A system comprising:
an incubator for incubating fertilized eggs under predetermined environmental conditions to promote hatching of the fertilized eggs;
a soundwave transmitter configured to transmit a variable frequency ranging from about 100 Hz to 2000 Hz during incubation to promote production of female embryos in the fertilized egg; and
a controller configured to operate the transmitter.

14. The system of claim 13, wherein said controller is further configured to control the temperature and/or the humidity during incubation.

## Patentansprüche

1. Verfahren zur Förderung der Produktion von weiblichen Embryos in Eiern, wobei das Verfahren die folgenden Schritte umfasst:
Bebrüten einer Mehrzahl von befruchteten Eiern, um ein Ausbrüten der befruchteten Eier zu fördern; und
Senden einer Schallwelle mit einer definierten Frequenz zu den befruchteten Eiern, wobei die definierte Frequenz im Bereich von etwa 100 Hz bis 2000 Hz liegt,
um dadurch die Produktion von weiblichen Embryos in den befruchteten Eiern zu fördern.

2. Verfahren nach Anspruch 1, wobei die befruchteten Eier Hühnereier sind, und wobei der resultierende prozentuale Anteil an weiblichen Küken über 75 % beträgt.

3. Verfahren nach Anspruch 1, wobei das Bebrüten für eine Dauer von etwa 21 Tagen durchgeführt wird.

4. Verfahren nach Anspruch 1, wobei die Schallwelle während der Bebrütung gesendet oder intermittierend gesendet wird.

5. Verfahren nach Anspruch 1, wobei die Schallwelle während der ersten 14 Tage der Bebrütung gesendet oder intermittierend gesendet wird; oder wobei die Schallwelle während eines oder mehrerer vorbestimmter Zeiträume innerhalb der Brutzeit gesendet oder intermittierend gesendet wird; oder wobei das Senden der Schallwelle in Abhängigkeit von einem Bebrütungstag variiert; oder wobei das Senden der Schallwelle ein intermittierendes Senden von Schallwellen an definierten Bebrütungstagen umfasst.

6. Verfahren nach Anspruch 5, wobei die Frequenz der Schallwelle zwischen einem oder mehreren vorbestimmten Zeiträumen variiert.

7. Verfahren nach Anspruch 5, wobei eine Frequenz während eines ersten vorbestimmten Zeitraums im Bereich von 600 Hz bis 700 Hz liegt.

8. Verfahren nach Anspruch 7,
wobei eine Frequenz während eines zweiten vorbestimmten Zeitraums im Bereich von 500 Hz bis 600 Hz liegt; wobei eine Frequenz während eines dritten vorbestimmten Zeitraums vorzugsweise im Bereich von 500 Hz bis 700 Hz liegt.

9. Verfahren nach einem der Ansprüche 1 bis 8,
wobei eine Dauer eines vorbestimmten Zeitraums im Bereich von 10 Minuten bis 5 Stunden liegt; wobei eine Pause zwischen zwei aufeinanderfolgenden vorbestimmten Zeiträumen vorzugsweise im Bereich von 1 Stunde bis 5 Tage liegt.

10. Verfahren nach einem der Ansprüche 1 bis 9,
wobei die Bebrütung unter mindestens einer kontrollierten Umgebungsbedingung durchgeführt wird, die aus Feuchtigkeit und Temperatur ausgewählt wird.

11. Verfahren nach Anspruch 10,
wobei die Feuchtigkeit im Bereich von 50 % bis 80 % liegt, wobei die Feuchtigkeit vorzugsweise etwa 55 % beträgt.

12. Verfahren nach einem der Ansprüche 10 bis 11,
wobei die Temperatur im Bereich von 36° bis 38° Celsius liegt.

13. System, umfassend:
einen Brutkasten zum Bebrüten von befruchteten Eiern unter vorbestimmten Umgebungsbedingungen, um ein Ausbrüten der befruchteten Eier zu fördern;
einen Schallwellensender, der so ausgelegt ist, dass er eine veränderliche Frequenz im Bereich von etwa 100 Hz bis 2000 Hz während der Bebrütung sendet, um die Produktion von weiblichen Embryos im befruchteten Ei zu fördern; und
eine Steuerung, die zum Betreiben des Senders ausgelegt ist.

14. System nach Anspruch 13,
wobei die Steuerung ferner zum Kontrollieren der Temperatur und/oder der Feuchtigkeit während der Bebrütung ausgelegt ist.

## Revendications

1. Procédé destiné à favoriser la production d'embryons femelles dans des œufs, le procédé comprenant les étapes suivantes :
incubation d'une pluralité d'œufs fertilisés pour favoriser l'éclosion des œufs fertilisés ; et
émission d'une onde sonore ayant une fréquence définie à destination des œufs fertilisés, la fréquence définie allant d'environ 100 Hz à 2000 Hz,
pour favoriser ainsi la production d'embryons femelles dans les œufs fertilisés.

2. Procédé de la revendication 1, dans lequel lesdits œufs fertilisés sont des œufs de poule et dans lequel le pourcentage résultant de nouveau-nés femelles est supérieur à 75 %.

3. Procédé de la revendication 1, dans lequel ladite incubation est effectuée pendant une durée d'environ 21 jours.

4. Procédé de la revendication 1, dans lequel l'onde sonore est émise ou émise par intermittence pendant l'incubation.

5. Procédé de la revendication 1, dans lequel l'onde sonore est émise ou émise par intermittence pendant les 14 premiers jours d'incubation ; ou dans lequel l'onde sonore est émise ou émise par intermittence pendant un ou plusieurs laps de temps prédéterminés à l'intérieur de la période d'incubation ; ou dans lequel l'émission de l'onde sonore varie en fonction d'un jour d'incubation ; ou dans lequel l'émission de l'onde sonore comprend l'émission par intermittence d'ondes sonores sur des jours d'incubation définis.

6. Procédé de la revendication 5, dans lequel la fréquence définie de l'onde sonore varie entre le ou les laps de temps prédéterminés.

7. Procédé de la revendication 5, dans lequel une fréquence pendant un premier laps de temps prédéterminé va de 600 Hz à 700 Hz.

8. Procédé de la revendication 7, dans lequel une fréquence pendant un deuxième laps de temps prédéterminé va de 500 Hz à 600 Hz ; de préférence dans lequel une fréquence pendant un troisième laps de temps prédéterminé va de 500 Hz à 700 Hz.

9. Procédé de l'une quelconque des revendications 1 à 8, dans lequel une durée d'un laps de temps prédéterminé varie entre 10 minutes et 5 heures ; de préférence dans lequel une pause entre deux laps de temps prédéterminés successifs varie entre 1 heure et 5 jours.

10. Procédé de l'une quelconque des revendications 1 à 9, dans lequel ladite incubation est effectuée sous au moins une condition environnementale régulée choisie parmi l'humidité et la température.

11. Procédé de la revendication 10, dans lequel l'humidité va de 50 % à 80 %, de préférence dans lequel l'humidité est d'environ 55 %.

12. Procédé de l'une quelconque des revendications 10 à 11, dans lequel la température va de 36° à 38° Celsius.

13. Système comprenant :
un incubateur destiné à incuber des œufs fertilisés sous des conditions environnementales prédéterminées pour favoriser l'éclosion des œufs fertilisés ;
un émetteur d'ondes sonores configuré pour émettre une fréquence variable allant d'environ 100 Hz à 2000 Hz pendant l'incubation pour favoriser la production d'embryons femelles dans les œufs fertilisés ; et
un dispositif de commande configuré pour faire fonctionner l'émetteur.

14. Système de la revendication 13, dans lequel ledit dispositif de commande est également configuré pour réguler la température et/ou l'humidité pendant l'incubation.
